# FASCICULE DE BREVET EUROPEEN

(11) **EP 0 890 107 B1**
(45) Date de publication et mention de la délivrance du brevet: **24.04.2002**
(21) Numéro de dépôt: 96934891.1
(22) Date de dépôt: 11.10.1996
(51) Int. Cl.: G01P 3/44

(54) **DISPOSITIF DE FIXATION D'UN CAPTEUR SUR UN PALIER A CORPS ROULANTS**
VORRICHTUNG ZUR BEFESTIGUNG EINES MESSAUFNEHMERS AN EINEM WÄLZLAGER
DEVICE FOR MOUNTING A SENSOR TO A BEARING HAVING ROLLING BODIES

(30) Priorité: 20.10.1995 FR 9512339
(43) Date de publication de la demande: 13.01.1999
(73) Titulaire: SNR ROULEMENTS, F-74010 Annecy (FR)
(72) Inventeur: ALFF, Denis, F-74000 Annecy (FR)
(74) Mandataire: Fernandez, Francis
(86) Numéro de dépôt international: FR9601584
(87) Numéro de publication internationale: WO9715833

(56) Documents cités:
- FR-A- 2 660 975
- FR-A- 2 693 272
- FR-A- 2 703 740

## Description

L'invention concerne un dispositif de fixation d'un capteur d'information fixe sans contact en regard d'un palier à corps roulants équipé d'un élément codeur pouvant être lu par ledit capteur.

La publication FR 2667947 décrit un dispositif de capteur de vitesse de rotation pincé entre un épaulement et la bague fixe d'un palier, monté par frettage dans son logement. Dans un tel montage, il est courant d'assister, sous l'effet de fortes et brèves sollicitations mécaniques ou sous l'effet de dilatations différentielles, à un déplacement axial ou reptation du palier dans son logement. Si le fonctionnement propre du palier n'est pas affecté puisqu'un arrêt axial de type "circlips" est souvent prévu, l'incidence sur le fonctionnement du capteur est loin d'être négligeable puisque la position relative du capteur par rapport à l'élément codeur est modifiée. De plus, le capteur n'est plus fermement maintenu mais présente un jeu qui le rend sensible aux vibrations importantes liées à l'environnement. Cette sensibilité peut se traduire par une oxydation des contacts et des micro-coupures et peut également entamer la fiabilité du signal. De plus, un tel montage entraîne, dans le cas d'une bague intérieure tournante, la centrifugation de la pollution telle que l'eau, la boue, le sel qui peut provoquer des frottements, des échauffements et une usure nuisible au bon fonctionnement. Enfin, un tel principe engendre d'importantes modifications sur le palier et son logement et ne permet pas la rechange indépendante des éléments capteur et palier.

Les publications FR 2660975 et FR 2703740 décrivent des supports de capteurs fixés de manière élastique sur la bague fixe du palier qui permettent de résoudre certains de ces inconvénients. Cependant, la liaison avec la bague fixe du palier nécessite toujours des aménagements spécifiques sur celle-ci. Ces aménagements peuvent amener à reconsidérer les conditions de montage du palier en raison de la réduction de portée d'emmanchement du roulement ou de l'espace dédié à son étanchéité intégrée. En outre, la diversité créée peut engendrer des surcoûts importants, soit sur les pièces elles-mêmes, soit sur les gammes de montage chez l'utilisateur.

L'invention vise à résoudre ces inconvénients. A cet effet, l'invention concerne un dispositif de fixation d'un capteur de détection d'un élément codeur lié à une bague mobile d'un palier, ladite bague mobile étant séparée par des corps roulants d'une bague fixe, ledit capteur étant monté sur un support disposé entre la bague fixe et un moyen d'arrêt axial du palier de manière à maintenir un entrefer constant entre l'élément codeur et le capteur grâce à des moyens élastiques montés sur ledit support, le dispositif étant caractérisé en ce que les moyens élastiques tendent à écarter le support du moyen d'arrêt axial.

Selon une autre caractéristique de l'invention, le support est constitué par une partie annulaire centrale se prolongeant de manière rigide, en direction de la bague fixe par une partie annulaire périphérique concentrique et disposée dans un plan différent de celui de ladite partie annulaire centrale, ladite partie annulaire périphérique portant les moyens élastiques qui s'étendent en direction de la partie annulaire centrale.

Selon une autre caractéristique de l'invention, les moyens élastiques sont constitués par des branches circulaires qui s'étendent, à la périphérie de la partie annulaire périphérique, le long de lumières percées à la jonction entre les parties annulaires centrale et périphérique, lesdites branches circulaires étant rattachées à ladite partie annulaire périphérique par au moins une de leurs extrémités et déformées en direction axiale de manière à constituer des ondulations s'étendant à la périphérie de la partie annulaire périphérique en direction de la partie périphérique centrale.

Selon une autre caractéristique de l'invention, chaque branche circulaire est constituée de deux segments indépendants rattachés chacun par une seule de ses extrémités à la partie annulaire périphérique .

Selon une autre caractéristique de l'invention, le moyen d'arrêt axial est constitué par un épaulement dans l'alésage intérieur duquel le support est centré par l'intermédiaire des bords internes de ses lumières.

Selon une autre caractéristique de l'invention, le moyen d'arrêt axial est constitué par un segment d'arrêt.

Selon une autre caractéristique de l'invention, la périphérie de la partie annulaire périphérique se prolonge en direction du palier, entre les branches circulaires, par des extensions axiales assurant le centrage du support sur le diamètre extérieur de la bague fixe du palier.

Selon une autre caractéristique de l'invention, le diamètre extérieur de la partie annulaire périphérique est ajusté dans l'alésage du pivot.

Selon une autre caractéristique de l'invention, l'alésage de la partie annulaire centrale du support se prolonge axialement par une collerette de rigidification.

Selon une autre caractéristique de l'invention, le support possède, à la jonction entre sa partie annulaire centrale et sa partie annulaire périphérique, des ouvertures supplémentaires permettant de faciliter l'évacuation par gravité ou centrifugation de la pollution pouvant pénétrer dans l'entrefer entre le capteur et l'élément codeur.

Selon une autre caractéristique de l'invention, le support possède un moyen de retenue procurant la fixation sans jeu du capteur sur ledit support.

Selon une autre caractéristique de l'invention, le moyen de retenue est constitué par une tête de fixation comportant deux glissières parallèles qui délimitent latéralement une ouverture radiale des parties annulaires, un bras prenant naissance à l'extérieur de chaque glissière pour s'étendre, parallèlement à ladite glissière, en direction du centre des parties annulaires puis se courbant à 180° pour s'étendre vers l'extérieur desdites parties annulaires, les deux bras se rejoignant en un montant de manière à constituer un étrier de fixation destiné à recevoir le capteur.

Selon une autre caractéristique de l'invention, le support est obtenu par des opérations successives de découpage et d'emboutissage d'une pièce unique en tôle mince.

Ce dispositif permet de maîtriser précisément, sans réglage et quelles que soient les conditions de fonctionnement, l'entrefer autorisé entre l'élément codeur et le capteur par rattrapage élastique des jeux de fonctionnement et de reptation. Ce dispositif présente en outre l'avantage de permettre le montage séparé des éléments constitutifs, à savoir le palier équipé de l'élément codeur, le support du capteur et le capteur lui-même sans modification majeure des organes concernés et environnants ou des gammes d'assemblage traditionnelles, notamment dans le montage des roues motrices des automobiles.

D'autres caractéristiques et avantages apparaîtront à la lecture de la description d'un exemple de dispositif selon l'invention, en référence aux dessins dans lesquels :
- la figure 1 est une vue en coupe d'un exemple du support selon l'invention monté sur une roue motrice automobile,

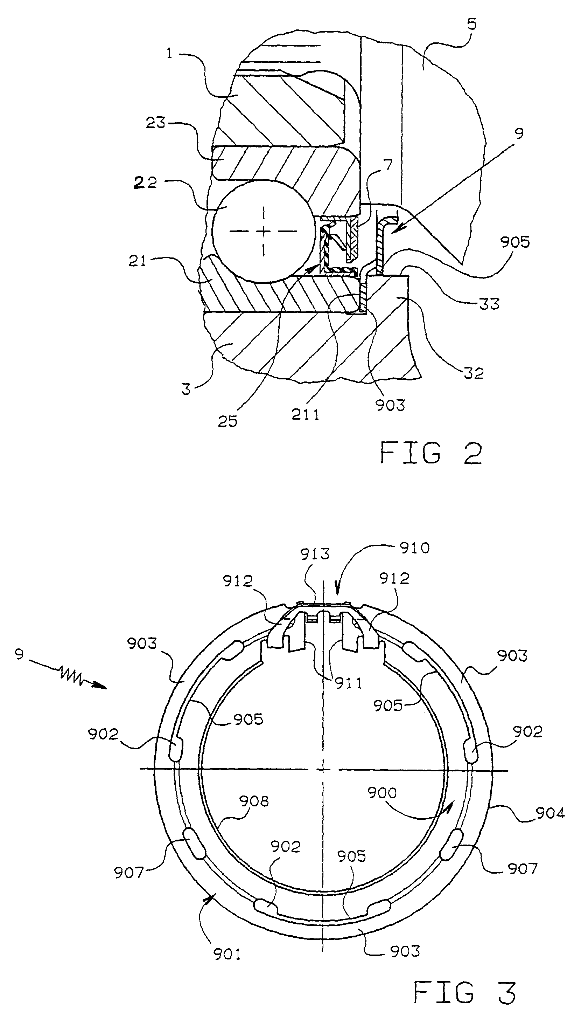

- la figure 2 est une vue à plus grande échelle d'un détail du montage de la figure 1,
- la figure 3 est une vue en plan du support selon l'invention,
- la figure 4 est une vue en perspective du support selon l'invention avec son capteur,
- la figure 5 est une vue partielle en coupe d'une première variante de montage du support selon l'invention,
- la figure 6 est une vue partielle en coupe d'une seconde variante de montage du support selon l'invention.

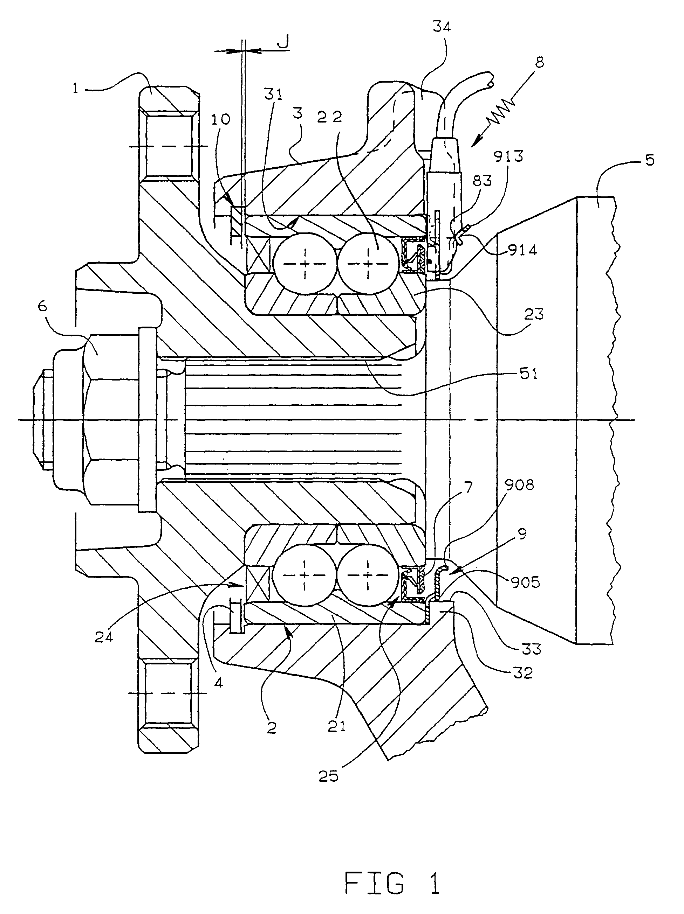

La figure 1 représente le montage d'un moyeu 1 de roue dans un palier 2 à roulements fixé par frettage à l'intérieur de l'alésage 31 d'un pivot 3, entre un épaulement 32 délimitant ledit alésage 31 du côté transmission et un segment d'arrêt 4 situé à l'extrémité du pivot 3 en regard de la roue. Le moyeu 1 est fixé sur un arbre de transmission 5 grâce à des cannelures 51 et un boulon 6. Le palier 2 à roulements, de dimensions standard, est constitué d'une bague fixe 21 séparée par des corps roulants 22 de bagues mobiles 23. Il est rendu étanche à l'aide d'une première garniture d'étanchéité 24 et d'une seconde garniture d'étanchéité 25. La seconde garniture d'étanchéité 25, disposée du côté de l'épaulement 32, est munie d'un élément codeur 7 lié à la bague mobile 23 et destiné à être détecté sans contact par un capteur 8 moyennant un entrefer prédéterminé. Un tel dispositif d'étanchéité intégrant un élément codeur est par exemple décrit dans la publication FR 2700588.

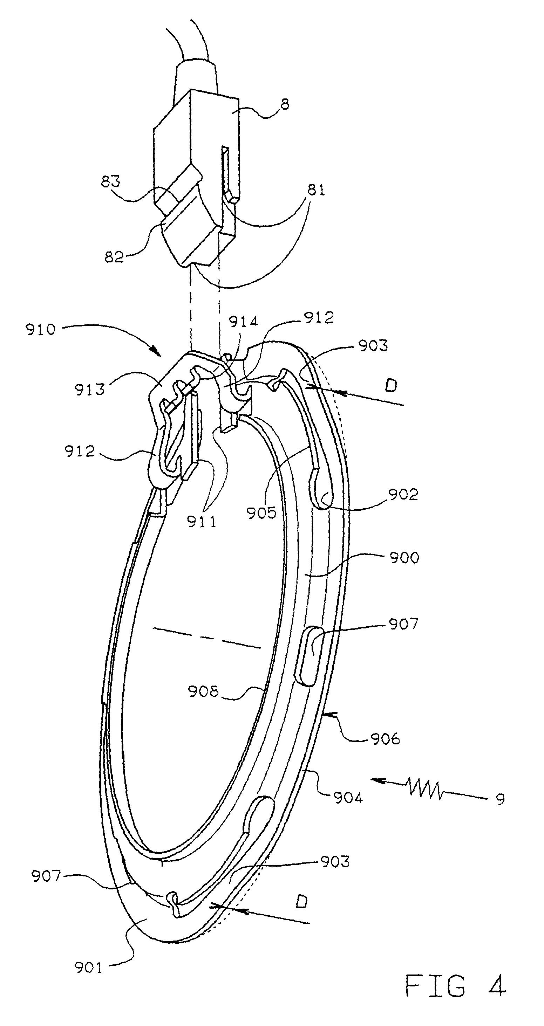

Le capteur 8 est fixé sur un support 9 pincé entre la bague fixe 21 du palier 2 et l'épaulement 32 du pivot 3. Ce support 9, représenté sur les figures 3 et 4, consiste principalement en une partie annulaire centrale 900 se prolongeant de manière rigide par une partie annulaire périphérique 901 concentrique et disposée dans un plan différent de celui de ladite partie annulaire centrale 900. Les parties annulaires 900,901 sont munies d'une ouverture radiale au niveau de laquelle prend place une tête 910 de fixation du capteur 8. Ladite tête 910 comprend deux glissières 911 parallèles qui délimitent latéralement ladite ouverture radiale des parties annulaires 900,901. A l'extérieur de chaque glissière 911 prend naissance un bras 912 qui commence par s'étendre, parallèlement à ladite glissière 911 en direction du centre des parties annulaires 900,901 puis se courbe à 180° pour s'étendre vers l'extérieur desdites parties annulaires 900,901. Les deux bras 912 se rejoignent en un montant 913 de manière à constituer un étrier de fixation destiné à recevoir le capteur 8. Celui-ci est introduit dans ledit étrier guidé par ses deux rainures latérales 81 dans lesquelles viennent s'engager les glissières 911. Le capteur 8 possède un front 82 suivi d'une gorge 83. Au cours de sa progression dans le creux des bras 912, le front 82 écarte le montant 913 jusqu'à ce que ce dernier vienne s'engager dans la gorge 83 par ses plis 914, assurant ainsi le clipsage du capteur 8 dans la tête de fixation 910 du support 9.

D'autre part, la jonction entre la partie annulaire centrale 900 et la partie annulaire 901 du support 9 est percée de lumières 902. Les parties circulaires qui s'étendent, à la périphérie de la partie annulaire périphérique 901, le long desdites lumières 902 constituent des branches circulaires 903 rattachées à ladite partie annulaire périphérique 901 par leurs extrémités. Ces branches circulaires 903 sont déformées en direction axiale de manière à constituer des ondulations s'étendant à la périphérie de la partie annulaire périphérique 901 en direction de la partie périphérique centrale 900. L'assemblage est simplement réalisé en introduisant, dans le pivot 3, le support 9 orienté avec la partie annulaire centrale 900 en direction de l'épaulement 32. Le centrage est procuré par ajustement du diamètre extérieur 904 de la partie annulaire périphérique 901 dans l'alésage 31 du pivot 3 ou éventuellement par ajustement des bords internes 905 des lumières 902 dans le diamètre intérieur 33 de l'épaulement 32. Lesdits bords internes 905 sont bien évidemment situés dans le plan de la partie annulaire centrale 900.

Le palier 2 est ensuite emmanché à force dans l'alésage 31 jusqu'à venir en butée et pincer le support 9 par la portion de la partie annulaire périphérique 901 située à l'extérieur des lumières 902. Le support 9 étant réalisé en une matière possédant une limite élastique suffisamment élevée, les branches circulaires 903 ainsi aplaties créent un effort de rappel élastique repoussant en permanence la partie annulaire périphérique 901 du support 9 pour la plaquer contre la bague fixe 21. Le pivot 3 possède une ouverture locale 34 qui permet l'introduction du capteur 8 et son positionnement dans la tête de fixation 910 du support 9.

Le segment d'arrêt 4 de sécurité est ensuite placé dans une gorge 10 du pivot 3, moyennant un jeu J nécessaire.

En fonctionnement, il est possible d'observer des mouvements de la bague fixe 21 dans l'alésage 31 pouvant déplacer le jeu J d'un côté ou de l'autre de ladite bague 21. Le rappel élastique procuré par la déformation initiale des branches 903 assure dans tous les cas de figure le contact permanent, contre la face latérale 211 de la bague fixe 21, de la face plane 906 de la partie annulaire périphérique 901 située à l'opposé de la partie annulaire centrale 900, garantissant ainsi la position axiale du support 9 et par conséquent un entrefer constant entre le capteur 8 et l'élément codeur 7.

La déformation des branches circulaires 903 est réalisée de manière à être supérieure au jeu J à rattraper afin de garantir en permanence une précharge suffisante limitant par frottement les micro-déplacements tant radiaux que circonférentiels du support 9 de manière à lui conférer une insensibilité aux vibrations élevées de l'environnement.

Selon une variante particulièrement avantageuse de l'invention, le support 9 est réalisé de manière simple et peu coûteuse par découpage emboutissage dans de la tôle d'épaisseur souhaitée et peut subir éventuellement un traitement thermique lui conférant les propriétés mécaniques voulues et/ou un revêtement contre la corrosion si nécessaire.

Les branches circulaires 903 sont obtenues par découpe, dans la partie annulaire périphérique 901, des lumières 902 puis par poinçonnage indépendamment du reste du support 9. La longueur des lumières 902 est fonction de l'effet élastique recherché qui dépend de l'épaisseur initiale de la tôle, de la résistance mécanique du matériau constitutif et de la valeur de la déformation. Il est bien clair qu'un support dont les éléments élastiques seraient différents des branches circulaires 903 ne sortirait pas du cadre de l'invention. Les branches pourraient, par exemple, n'être rattachées à la partie annulaire périphérique 901 que par une seule de leurs extrémités, être rectilignes, etc.

La partie annulaire centrale 900 du support 9 constitue également une protection supplémentaire contre la pollution directe par projection en évitant la présence de particules agressives dans la zone de l'entrefer et sur la garniture d'étanchéité 25. De plus, il est aisé de réaliser sans surcoût des ouvertures 907 supplémentaires à la jonction entre la partie annulaire périphérique 901 et la partie annulaire centrale 900 de manière à faciliter l'évacuation par gravité ou centrifugation de la pollution pouvant pénétrer dans l'entrefer entre le capteur 8 et l'élément codeur 7. Enfin, le support 9 peut être rigidifié en réalisant, dans l'alésage de sa partie annulaire centrale 900, une collerette 908 assurant la stabilité dimensionnelle de l'ensemble.

La tête 910 de fixation du capteur 8 est également réalisée dans la même pièce par un découpage créant les deux glissières 911 et le profil en étrier constitué des bras 912 et du montant 913 puis en réalisant un pliage desdits bras 912.

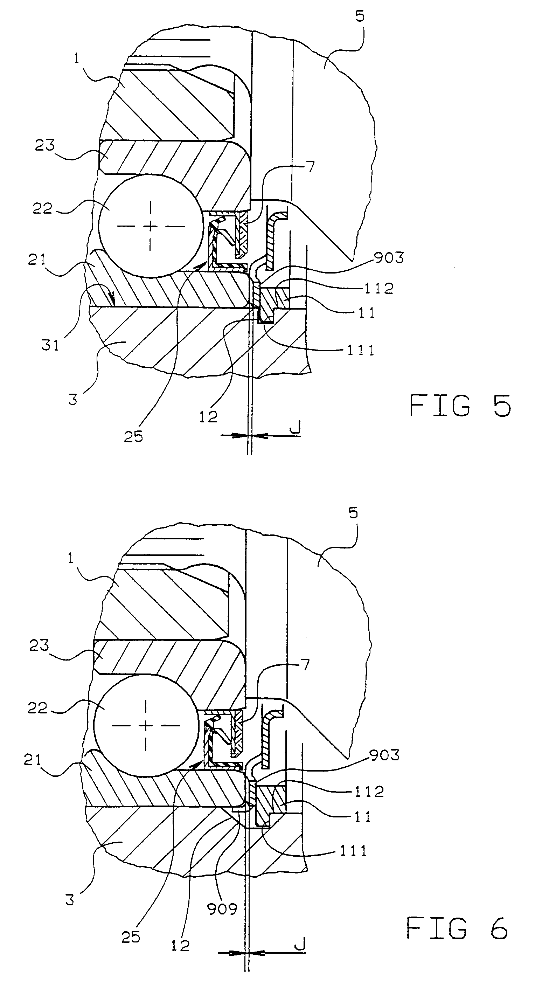

Il est possible d'envisager des variantes de réalisation dans lesquelles le sens du montage du palier 2 est inversé. Dans ce cas, l'épaulement 32 de la figure 1 peut être placé en lieu et place du segment d'arrêt 4. Le sens de montage doit alors être inversé et, comme il est représenté sur les figures 5 et 6, l'arrêt de sécurité sera réalisé à l'aide d'un autre segment d'arrêt 11 placé cette fois du côté du capteur 8.

L'assemblage s'effectue cette fois en montant d'abord le palier 2 dans le pivot 3, puis en insérant le support 9 avant la mise en place du segment d'arrêt 11. Le jeu J nécessaire est donc situé dès l'origine du côté du support 9 et sera rattrapé de la même manière que précédemment, quelle que soit la position du palier en fonctionnement.

L'absence d'épaulement ne permettant plus le centrage radial du support 9 par l'intermédiaire des bords internes 905 des lumières 902, ce centrage sera réalisé par ajustement du diamètre extérieur 904 de la partie annulaire périphérique 901 dans l'alésage 31 tel que représenté sur la figure 5 ou à l'aide d'extensions axiales 909 pratiquées sur le diamètre extérieur 904 du support 9 de manière à se centrer sur la diamètre extérieur de la bague fixe 21 du palier 2 comme il est représenté sur la figure 6.

Dans les deux cas, pour éviter que le support 9 et notamment sa partie annulaire centrale 900 ne gène la mise en place du segment d'arrêt 11, ce dernier pourra être réalisé dans une section plus mince et de hauteur réduite.

Afin de ne pas altérer sa fonction mécanique d'arrêt de roulement sous de très fortes sollicitations mécaniques axiales, le segment d'arrêt 11 comportera alors une section en profil de "L" dont les faces internes 111 et 112 seront en contact avec les faces correspondantes d'une gorge 12. On évitera ainsi une flexion sous effort de ce segment autour de l'axe d'inertie de sa section ce qui empêche toute éjection accidentelle de celui-ci.

Bien entendu, l'invention n'est nullement limitée au mode de réalisation décrit et illustré qui n'a été donné qu'à titre d'exemple. En particulier, le support de capteur est utilisable avec tout type de palier quels que soient les corps roulants utilisés.

## Revendications

1. Dispositif de fixation d'un capteur (8) de détection d'un élément codeur (7) lié à une bague mobile (23) d'un palier (2), ladite bague mobile (23) étant séparée par des corps roulants (22) d'une bague fixe (21), ledit capteur (8) étant monté sur un support (9) disposé entre la bague fixe (21) et un moyen d'arrêt axial (11,32) du palier (2) de manière à maintenir un entrefer constant entre l'élément codeur (7) et le capteur (8) grâce à des moyens élastiques (903) montés sur ledit support (9), **caractérisé en ce que** les moyens élastiques (903) tendent à écarter le support (9) du moyen d'arrêt axial (11,32).

2. Dispositif de fixation selon la revendication précédente **caractérisé en ce que** le support (9) est constitué par une partie annulaire centrale (900) se prolongeant de manière rigide, en direction de la bague fixe (21) par une partie annulaire périphérique (901) concentrique et disposée dans un plan différent de celui de ladite partie annulaire centrale (900), ladite partie annulaire périphérique (901) portant les moyens élastiques (903) qui s'étendent en direction de la partie annulaire centrale (900).

3. Dispositif de fixation selon la revendication précédente **caractérisé en ce que** les moyens élastiques sont constitués par des branches circulaires (903) qui s'étendent, à la périphérie de la partie annulaire périphérique (901), le long de lumières (902) percées à la jonction entre les parties annulaires centrale (900) et périphérique (901), lesdites branches circulaires (903) étant rattachées à ladite partie annulaire périphérique (901) par au moins une de leurs extrémités et déformées en direction axiale de manière à constituer des ondulations s'étendant à la périphérie de la partie annulaire périphérique (901) en direction de la partie périphérique centrale (900).

4. Dispositif de fixation selon la revendication précédente **caractérisé en ce que** chaque branche circulaire (903) est constituée de deux segments indépendants rattachés chacun par une seule de ses extrémités à la partie annulaire périphérique (901).

5. Dispositif de fixation selon l'une quelconque des revendications précédentes **caractérisé en ce que** le moyen d'arrêt axial est constitué par un épaulement (32) dans l'alésage intérieur (33) duquel le support (9) est centré par l'intermédiaire des bords internes (905) de ses lumières (902).

6. Dispositif de fixation selon l'une quelconque des revendications 1 à 4 **caractérisé en ce que** le moyen d'arrêt axial est constitué par un segment d'arrêt (11).

7. Dispositif de fixation selon la revendication 6 **caractérisé en ce que** la périphérie de la partie annulaire périphérique (901) se prolonge en direction du palier (2), entre les branches circulaires (903), par des extensions axiales (909) assurant le centrage du support (9) sur le diamètre extérieur de la bague fixe (21) du palier (2).

8. Dispositif de fixation selon la revendication 6 **caractérisé en ce que** le diamètre extérieur (904) de la partie annulaire périphérique (901) est ajusté dans l'alésage (31) du pivot (3).

9. Dispositif de fixation selon l'une quelconque des revendications précédentes **caractérisé en ce que** l'alésage de la partie annulaire centrale (900) du support (9) se prolonge axialement par une collerette (908) de rigidification.

10. Dispositif de fixation selon l'une quelconque des revendications précédentes **caractérisé en ce que** le support (9) possède, à la jonction entre sa partie annulaire centrale (900) et sa partie annulaire périphérique (901), des ouvertures (907) supplémentaires permettant de faciliter l'évacuation par gravité ou centrifugation de la pollution pouvant pénétrer dans l'entrefer entre le capteur (8) et l'élément codeur (7).

11. Dispositif de fixation selon l'une quelconque des revendications précédentes **caractérisé en ce que** le support (9) possède un moyen de retenue (901) procurant la fixation sans jeu du capteur (8) sur ledit support (9).

12. Dispositif de fixation selon la revendication précédente **caractérisé en ce que** le moyen de retenue est constitué par une tête (910) de fixation comportant deux glissières (911) parallèles qui délimitent latéralement une ouverture radiale des parties annulaires (900,910), un bras (912) prenant naissance à l'extérieur de chaque glissière (911) pour s'étendre, parallèlement à ladite glissière (911), en direction du centre des parties annulaires (900,901) puis se courbant à 180° pour s'étendre vers l'extérieur desdites parties annulaires (901), les deux bras (912) se rejoignant en un montant (913) de manière à constituer un étrier de fixation destiné à recevoir le capteur (8).

13. Dispositif de fixation selon l'une quelconque des revendications précédentes **caractérisé en ce que** le support (9) est obtenu par des opérations successives de découpage et d'emboutissage d'une pièce unique en tôle mince.

14. Application du dispositif de fixation selon l'une quelconque des revendications précédentes à un montage de roue automobile pour permettre la lecture d'informations provenant de l'ensemble tournant.

## Claims

1. Device for mounting a sensor (8) for sensing a coding element (7) connected to a mobile ring (23) of a bearing (2), said mobile ring (23) being separated from a fixed ring (21) by rolling bodies (22), said sensor (8) being mounted on a support (9) disposed between the fixed ring (21) and an axial stopping means (11, 32) of the bearing (2), in a manner such as to maintain a constant gap between the coding element (7) and the sensor (8) by virtue of elastic means (903) mounted on said support (9), **characterised in that** the elastic means (903) tend to separate the support (9) from the axial stopping means (11, 32).

2. Mounting device according to the preceding claim, **characterised in that** the support (9) is constituted by a central annular part (900) extended in a rigid manner, in the direction of the fixed ring (21) by a concentric peripheral annular part (901) disposed in a plane different to that of said central annular part (900), said peripheral annular part (901) having elastic means (903) which extend in the direction of the central annular part (900).

3. Mounting device according to the preceding claim, **characterised in that** the elastic means are constituted by circular branches (903) which extend, at the periphery of the peripheral annular part (901), along apertures (902) made at the junction between the central (900) and peripheral (901) annular parts, said circular branches (903) being attached to said peripheral annular part (901) by at least one of their extremities and deformed in the axial direction such as to constitute undulations extending to the periphery of the peripheral annular part (901) in the direction of the peripheral. central part (900).

4. Mounting device according to the preceding claim, **characterised in that** each circular branch (903) is constituted by two independent segments, each attached by only one of their extremities to the peripheral annular part (901).

5. Mounting device according to any of the preceding claims, **characterised in that** the axial stopping means is constituted by a shoulder (32), in the internal bore (33) of which the support (9) is centred by means of the internal edges (905) of its apertures (902).

6. Mounting device according to any of claims 1 to 4, **characterised in that** the axial stopping means is constituted by a stopping segment (11).

7. Mounting device according to claim 6, **characterised in that** the periphery of the peripheral annular part (901) extends in the direction of the bearing (2), between the circular branches (903), by means of axial extensions (909) providing the centring of the support (9) on the external diameter of the fixed ring (21) of the bearing (2).

8. Mounting device according to claim 6, **characterised in that** the external diameter (904) of the peripheral annular part (901) is fitted into the bore (31) of the pivot (3).

9. Mounting device according to one of the preceding claims, **characterised in that** the bore in the central annular part (900) of the support (9) extends axially by means of a stiffening flange (908).

10. Mounting device according to one of the preceding claims, **characterised in that** the support (9) has, at the junction between its central annular part (900) and its peripheral annular part (901), supplementary apertures (907) allowing evacuation by gravity or by centrifuging of the pollution which may penetrate into the gap between the sensor (8) and the coding element (7) to be made easier.

11. Mounting device according to one of the preceding claims, **characterised in that** the support (9) has a retaining means (901) providing mounting of said sensor (8) without clearance on said support (9).

12. Mounting device according to the preceding claim, **characterised in that** the retaining means is constituted by a fixing head (910) comprising two parallel slide bars (911) which laterally delimit a radial aperture in the annular parts (900, 910), an arm (912) originating on the exterior of each slide bar (911) in order to extend parallel to said slide bar (911) in the direction of the centre of the annular parts (900, 901) then bending by 180□ to extend towards the exterior of said annular parts (901), the two arms (912) joining together again in an upright (913) such as to form a calliper intended for receiving the sensor (8).

13. Mounting device according to one of the preceding claims, **characterised in that** the support (9) is produced by successive operations of cutting and shaping a single piece of thin sheet metal.

14. Application of the mounting device according to one of the preceding claims to a motor vehicle wheel mounting to allow the reading of information coming from the rotating assembly.

## Patentansprüche

1. Vorrichtung zur Befestigung eines Aufnehmers (8) zur Erfassung eines Kodierelementes (7), das mit einem beweglichen Ring (23) eines Lagers (2) verbunden ist, wobei der bewegliche Ring (23) durch Rollkörper (22) von einem feststehenden Ring (21) getrennt ist und wobei der Aufnehmer (8) auf einer Halterung (9) angeordnet ist, die zwischen dem feststehenden Ring (21) und einer axialen Anschlaganordnung (11,32) des Lagers (2) derart angeordnet ist, dass ein konstanter Spalt zwischen dem Kodierelement (7) und dem Aufnehmer (8) beibehalten wird mittels einer elastischen, an der Halterung vorgesehenen Anordnung (903), **dadurch gekennzeichnet, dass** die elastische Anordnung (903) die Halterung (9) in Richtung einer Entfernung der Halterung von der axialen Anschlaganordnung (11,32) beaufschlagt.

2. Vorrichtung zur Befestigung nach dem vorhergehenden Anspruch, **dadurch gekennzeichnet, dass** die Halterung (9) aus einem zentralen ringförmigen Abschnitt (900) besteht, der in steifer Weise in Richtung zum feststehenden Ring (21) hin durch einen konzentrischen ringförmigen Umfangsabschnitt (901) verlängert ist, der in einer Ebene angeordnet ist, die sich von derjenigen des zentralen ringförmigen Abschnitts (900) unterscheidet, wobei der ringförmige Umfangsabschnitt (901) die elastische Anordnung (903) trägt, die sich in Richtung des zentralen ringförmigen Abschnitts (900) erstreckt.

3. Vorrichtung zur Befestigung nach dem vorhergehenden Anspruch, **dadurch gekennzeichnet, dass** die elastische Anordnung aus kreisförmigen Armen (903) besteht, die sich am Umfang des ringförmigen Umfangsabschnitts (901) entlang von Aussparungen (902) erstrecken, die an der Verbindungsstelle zwischen den zentralen ringförmigen Abschnitten (900) und den ringförmigen Umfangsabschnitten (901) eingearbeitet sind, wobei die kreisförmigen Arme (903) mit dem ringförmigen Umfangsabschnitt (901) über wenigstens eines ihrer Enden verbunden sind und in Axialrichtung derart verformt sind, dass Wellen gebildet werden, die vom Umfang des ringförmigen Umfangsabschnitts (901) aus in Richtung des zentralen ringförmigen Abschnitts (900) verlaufen.

4. Vorrichtung zur Befestigung nach dem vorhergehenden Anspruch, **dadurch gekennzeichnet, dass** jeder kreisförmige Arm (903) aus zwei unabhängigen Segmenten besteht, deren jedes über ein einziges ihrer Enden mit dem ringförmigen Umfangsabschnitt (901) verbunden ist,

5. Vorrichtung zur Befestigung nach einem der vorhergehenden Ansprüche, **dadurch gekennzeichnet, dass** die axiale Anschlaganordnung aus einem Vorsprung (32) besteht, in dessen Innenbohrung (33) die Halterung (9) mittels der Innenränder (905) der Aussparungen (902) zentriert ist.

6. Vorrichtung zur Befestigung nach einem der Ansprüche 1 bis 4, **dadurch gekennzeichnet, dass** die axiale Anschlaganordnung aus einem Anschlagsegment (11) besteht.

7. Vorrichtung zur Befestigung nach Anspruch 6, **dadurch gekennzeichnet, dass** der Umfang des ringförmigen Umfangsabschnitts (901) in Richtung Lager (2) und zwischen den kreisförmigen Armen (903) durch axiale Verlängerungen (909) verlängert ist, die die Zentrierung der Halterung (9) auf dem Aussendurchmesser des feststehenden Ringes (21) des Lagers (2) gewährleisten.

8. Vorrichtung zur Befestigung nach Anspruch 8, **dadurch gekennzeichnet, dass** der Aussendurchmesser (904) des ringförmigen Umfangsabschnitts (901) im Passsitz in der Bohrung (31) des Gelenks (3) sitzt.

9. Vorrichtung zur Befestigung nach einem der vorhergehenden Ansprüche, **dadurch gekennzeichnet, dass** die Bohrung im zentralen ringförmigen Abschnitt (900) der Halterung (9) in Axialrichtung durch einen Versteifungskragen (908) verlängert ist.

10. Vorrichtung zur Befestigung nach einem der vorhergehenden Ansprüche, **dadurch gekennzeichnet, dass** die Halterung (9) an der Verbindungsstelle zwischen dem zentralen ringförmigen Abschnitt (900) und dem ringförmigen Umfangsabschnitt (901) mit zusätzlichen Öffnungen (907) versehen ist zur Erleichterung der Abfuhr durch Schwerkraft oder Zentrifugalkraft von Schmutz, der in den Spalt zwischen Aufnehmer (8) und Kodierelement (7) eingedrungen ist.

11. Vorrichtung zur Befestigung nach einem der vorhergehenden Ansprüche , **dadurch gekennzeichnet, dass** die Halterung (9) eine Festhalteanordnung (901) aufweist zur spielfreien Befestigung des Aufnehmers (8) an der Halterung (9).

12. Vorrichtung zur Befestigung nach einem der vorhergehenden Ansprüche, **dadurch gekennzeichnet, dass** die Festhalteanordnung aus einem Befestigungskopf (910) besteht, der parallele Gleitstücke (911) aufweist, die seitlich eine radiale Öffnung in den ringförmigen Abschnitten (900,901) begrenzen, wobei sich ein Arm (912) ausserhalb eines jeden Gleitstücks und parallel zum Gleitstück (911) erstreckt in Richtung zur Mitte der ringförmigen Abschnitte (900,901) hin und der anschliessend um 180° gekrümmt ist und sich danach zum Äusseren der ringförmigen Abschnitte (901) hin erstreckt, wobei die beiden Arme (912) sich mit einer Strebe (913) vereinigen, sodass ein Befestigungsbügel zur Aufnahme des Aufnehmers (8) gebildet wird.

13. Vorrichtung zur Befestigung nach einem der vörhergehenden Ansprüche **dadurch gekennzeichnet, dass** die Halterung (9) durch aufeinanderfolgende Schritte des Stanzens und Tiefziehens eines einzigen dünnen Blechstücks hergestellt worden ist.

14. Anwendung der Vorrichtung zur Befestigung nach einem der vorhergehenden Ansprüche auf den Einbau eines Fahrzeugrades zur Erfassung von Informationen die von dem sich drehenden Aufbau stammen.
